# EUROPÄISCHE PATENTSCHRIFT

(11) **EP 1 080 849 B1**
(45) Veröffentlichungstag und Bekanntmachung des Hinweises auf die Patenterteilung: **11.03.2009**
(21) Anmeldenummer: 00810635.3
(22) Anmeldetag: 18.07.2000
(51) Int. Cl.: B25D 16/00

(54) **Umschalteinrichtung für multifunktionale handgeführte Werkzeugmaschinen**
Switching device for multi-functional handheld drilling machine
Dispositif de commutation pour foreuse portable multi-fonctionelle

(30) Priorität: 03.09.1999 DE 19942156
(43) Veröffentlichungstag der Anmeldung: 07.03.2001
(73) Patentinhaber: HILTI Aktiengesellschaft, 9494 Schaan (LI)
(72) Erfinder: Manschitz, Erwin, 82110 Germering (DE); Hellmann, Peter, 86836 Obermeitingen (DE)
(74) Vertreter: Wildi, Roland

(56) Entgegenhaltungen:
- EP-A- 0 775 555
- DE-A- 4 401 664
- DE-A- 19 937 767
- JP-A- 10 261 891
- US-A- 2 016 829

## Beschreibung

Die Erfindung betrifft einen elektrischen Kombihammer für wahlweise Anwendung als Bohr- oder Meißelhammer, mit einer Einrichtung zur EIN/AUS- oder Umschaltung einzelner elektrischer Systemfunktionen bei Wechsel des Bearbeitungsmodus durch Betätigung einer an der Maschine vorhandenen Umschaltvorrichtung durch den Benutzer, die einen aus zwei relativ zueinander bewegbaren Elementen bestehenden bistabilen Schalter aufweist.

Aus der Druckschrift DE 4 401 664 A ist ein Bohr- und Meißelhammer mit nockenbesetztem Umschaltknopf für eine Wahl von Bohr- bzw. Bohrhammer- und Meißelbetrieb bekannt. Bei Meißelbetrieb soll die Nenndrehzahl des Motors um einen bestimmten Betrag erhöht werden. Bei einer bevorzugten beschriebenen Ausführungvariante erfolgt die Drehzahlumstellung über einen stangenartigen Schieberegler der die wirksame Polzahl des Motors verändert.

Bei Kombihämmern wird ein Werkzeug zusammen mit seinem Haltekopf bei Wahl des Bohrbetriebs drehend oder schlagdrehend angetrieben, während bei Wahl des Meißelbetriebs das Werkzeug, also der Meißel, ausschließlich vorwärts-rückwärts, also schlagend, angetrieben wird. Die Umschaltung von der einen auf die andere Antriebsart des jeweiligen Werkzeugs erfolgt durch einen am Gehäuse gelagerten Schaltknopf durch Verdrehen oder mittels einer zwischen mindestens zwei Schaltpositionen verschiebbaren Schalttaste in an sich bekannter Weise. Bohrhämmer zählen in aller Regel zu einer Geräteklasse mit relativ hoher Antriebsleistung. Um bei Wahl des Bohrbetriebs sogenannte Rotationsunfälle aufgrund Blockierens des Werkzeugs, beispielsweise bei einem "Eisentreffer", durch das auf das Gerätegehäuse wirkende Reaktionsmoment zu verhindern, enthalten solche Werkzeugmaschinen eine in der Regel in die Antriebselektronik mit integrierte Schaltung zur Ermittlung des relativen Drehwinkels des Gehäuses. Überschreitet der aufgrund des beim Blockieren des Werkzeugs schlagartig ansteigenden Reaktionsmoments folgende Drehwinkel am Gehäuse innerhalb einer kurzen Zeitspanne von wenigen Millisekunden einen bestimmten Wert, so wird der Antriebsstrang zwischen Motor und Werkzeughalter durch eine rasch wirkende Kupplung unterbrochen. Beispiele für solche Reaktionsmomentüberwachungseinrichtungen sind in den Druckschriften WO 88 06 508 A3, DE 43 44 817 C2 bzw. EP 0 666 148 A2 sowie DE 196 41 618 A1 ausführlich beschrieben.

Wählt der Benutzer einen anderen Bearbeitungsmodus, also beispielsweise den Meißelbetrieb, so besteht die Gefahr von Rotationsunfällen nicht, da das Werkzeug nicht mehr drehend angetrieben wird. Bei Meißelbetrieb sind also einzelne elektrische Systemfunktionen anders einzustellen als bei Bohrbetrieb. Insbesondere ist ein unmotiviertes Abschalten des Kombihammers unerwünscht, da dadurch der Arbeitsprozeß unnötig verlangsamt wird. Dies gilt insbesondere für bestimmte Anwendungsfälle und Arbeitsabläufe bei denen eine ruckartige rotatorische Bewegung der Werkzeugmaschine unvermeidbar ist, etwa beim sogenannten Abspitzen an den Rändern und Kanten einer Betonkonstruktion, beim Durchstechen von Mauerdurchbrüchen mittels Meißel und dergleichen. In anderen Worten: Bei Wahl des Meißelbetriebs sollte also die elektrische Systemfunktion der zeitabhängigen Rotationswinkelüberwachung und gegebenenfalls Unterbrechung des Antriebsstrangs ausgeschaltet sein und/oder es sollten einzelne Betriebsparameter der Werkzeugmaschine umgeschaltet werden.

Der Erfindung liegt damit die Aufgabe zugrunde, eine Einrichtung für multifunktionale handgeführte Werkzeugmaschinen zu schaffen, durch die bei Wechsel eines Bearbeitungsmodus, also beispielsweise bei Wechsel von Bohr- auf Meißelbetrieb im Falle eines Kombihammers der Elektronik der Maschine eine Information zugeführt wird, welche die Auswahl bestimmter elektrischer Systemfunktionen in Anpassung auf den gewählten Arbeitsmodus sicherstellt.

Der im Patentanspruch 1 definierten Lösung der gestellten Aufgabe, für die vorteilhafte Ergänzungen und Ausführungsvarianten in abhängigen Patentansprüchen definiert sind, liegt die Idee zugrunde, die vom Benutzer manuell, also über einen mechanischen Drehknopf, eine Schiebetaste oder dergleichen, vorzunehmende Auswahl des Bearbeitungsmodus in eine geeignete Wegverschiebung umzusetzen und diese Wegverschiebung mittels eines bistabilen aus zwei zueinander bewegbaren Elementen bestehenden Schalters in eine digitale Information zu transformieren, mittels der die für den betreffenden Betriebsmodus maßgebliche elektrische Systemfunktion gewählt wird. Dies kann beispielsweise so geschehen, daß im Falle eines Kombihammers bei Wahl des Meißelbetriebs die Abfrageroutine für das Auslösekriterium einer Magnetkupplung ausgeblendet wird. Eine andere Möglichkeit besteht darin, das tatsächliche Schaltsignal für die Magnetkupplung bei Wahl des Meißelbetriebs zu unterbinden.

Die Erfindung und vorteilhafte Einzelheiten werden nachfolgend unter Bezug auf die Zeichnungen in einigen beispielsweisen Ausführungsformen näher erläutert. Es zeigen:
- **Fig. 1**: in schematischer Ansicht eine erste Ausführungsform einer erfindungsgemäßen EIN/AUS- oder Umschalteinrichtung für eine multifunktionale handgeführte Werkzeugmaschine, insbesondere einen Kombihammer;
- **Fig. 2**: eine abgewandelte Ausführungsform der Umschalteinrichtung;
- **Fig. 3**: eine für manche Anwendungsfälle, insbesondere bei beengten Einbauverhältnissen vorteilhafte Ausführungsform einer erfindungsgemäßen Umschalteinrichtung;
- **Fig. 4**: eine gegenüber den Fig. 1 und 2 abgewandelte Ausführungsvariante einer Umschalteinrichtung mit erfindungsgemäßen Merkmalen; und
- **Fig. 5**: das Flußdiagramm einer Programm-Unterroutine zur abschaltbaren Überwachung der Auslösung einer Trennkupplung in einem Kombihammer in Abhängigkeit von beispielsweise durch Beschleunigungsmesser im Gerätegehäuse ermittelten kritischen Beschleunigungswerten im Falle eines blockierenden Werkzeugs.

Einander entsprechende Bauteile oder Baugruppen sind in allen Figuren mit den gleichen Bezugshinweisen gekennzeichnet.

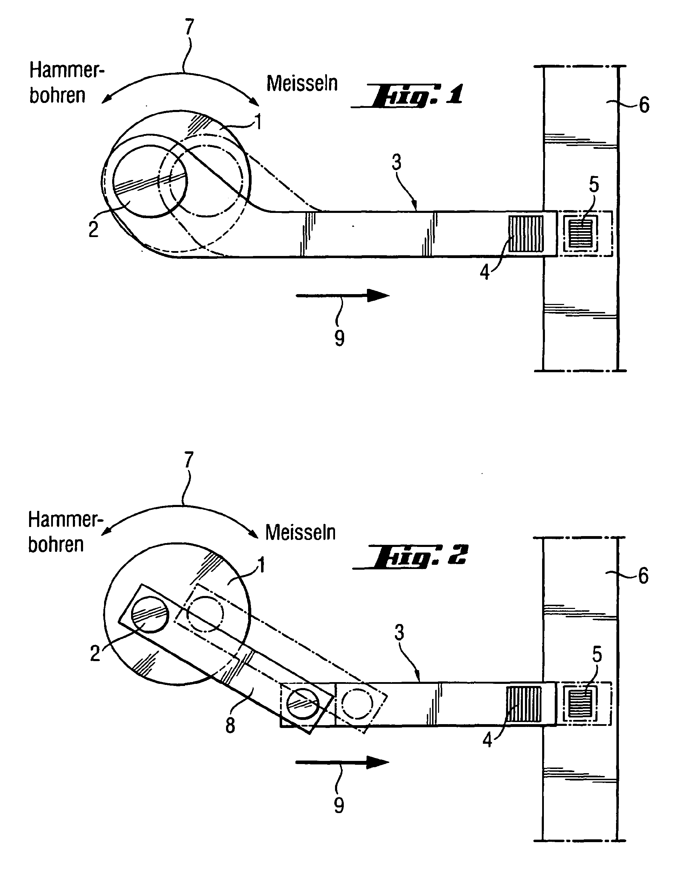

Fig. 1 veranschaulicht ein erstes Ausführungsbeispiel für eine erfindungsgemäße Ab- oder Umschalteinrichtung. Im (nicht gezeigten) Gehäuse eines elektrischen Kombihammers ist ein nur schematisch angedeuteter Umschaltknopf 1 gelagert, der sich zwischen zwei in der Regel um 180° gegeneinander versetzten Positionen in den Richtungen eines Doppelpfeils 7 verstellen läßt, wobei im Falle eines Kombihammers zwischen dem Arbeitsmodus "Meißeln" und dem Arbeitsmodus "Hammerbohren" gewählt werden kann. Der Umschaltknopf 1 ist auf der dem Betrachter zugekehrten Innenseite der Werkzeugmaschine mit einem vorzugsweise einstückig angeformten exzentrischen Kurbelzapfen 2 versehen, auf dem eine nach Art eines Pleuels hin und her verschiebbare Schaltstange 3 drehbar gelagert ist, die bei Wahl der Schaltstellung "Hammerbohren" in der in ausgezogener Linienführung wiedergegebenen Schaltposition steht. Wird dagegen vom Benutzer der Betriebsmodus "Meißeln" gewählt, so ist die Schaltstange in Richtung des Pfeils 9 nach rechts verschoben, was in gestrichelter Linienführung verdeutlich ist. Die Schaltstange 3 kann in einer (nicht gezeigten) Führung, die auf der Innenseite des Gehäuses der Maschine angeformt sein kann, geführt sein. Am vorderen, dem Kurbelzapfen 2 abgekehrten Ende der Schaltstange 3 ist ein Schaltmagnet, insbesondere ein Permanentmagnet 4 fixiert. Der Schaltmagnet 4 wirkt mit einem sensorgesteuerten Schalter, insbesondere einem Hall-Sensor 5 zusammen, der schaltungstechnisch (in nicht gezeigter Weise) in eine Steuer- und Überwachungselektronik 6 der Werkzeugmaschine eingebunden ist. In der dargestellten Schaltposition "Hammerbohren" befindet sich der Permanentmagnet 4 in einer vom Hall-Sensor 5 entfernten Position. Der mit dem Hall-Sensor 5 verbundene Schalter ist dabei beispielsweise AUS-geschaltet. Wird der Drehknopf 1 in die Position "Meißeln" verdreht, so gelangt der Schaltmagnet 4 in einen Überdeckungsbereich mit dem Hall-Sensor 5, so daß dieser von der Schaltstellung AUS (NEIN) in die Schaltposition EIN (JA) umschaltet. In der Schaltposition "Hammerbohren", also in der Schaltposition AUS des Hall-Sensors 5, sind bestimmte Betriebsparameter des Antriebs gewählt und insbesondere eine Reaktionsmomentüberwachung wirksam, die gewährleistet daß eine (nicht gezeigte) Magnetkupplung den Antriebsstrang zwischen Antrieb und Werkzeughalter schlagartig unterbricht, sobald eine für den Benutzer gefährliche Werkzeugblockierung detektiert wird. In der Stellung "Meißeln" des Drehknopfs 1 dagegen ist der Hall-sensorbetätigte Schalter beispielsweise EIN-geschaltet. In diesem Fall ist die Software-Routine für die Reaktionsmomentüberwachung unwirksam und/oder das tatsächliche Schaltsignal für die Magnetkupplung ist unterbunden. Mit anderen Worten: Bei Wahl des Betriebsmodus "Meißeln" ist das unerwünschte Abschalten des Kombihammers während eines Arbeitsprozesses auch für den Fall unterbunden, daß beim Meißeln, bedingt durch den Arbeitsgang und/oder den Untergrund, artefaktartige ruckartige rotatorische Bewegungen an der Maschine auftreten.

Die Fig. 2 zeigt eine etwas anders gestaltete Ausführung für den hin- und hergehenden Kurbelantrieb der Schubstange 3. Je nach den räumlichen Verhältnissen der Maschine kann diese Ausführungsvariante, bei der die Schubstange 3 über eine Kurbel 8 angetrieben wird, zu bevorzugen sein.

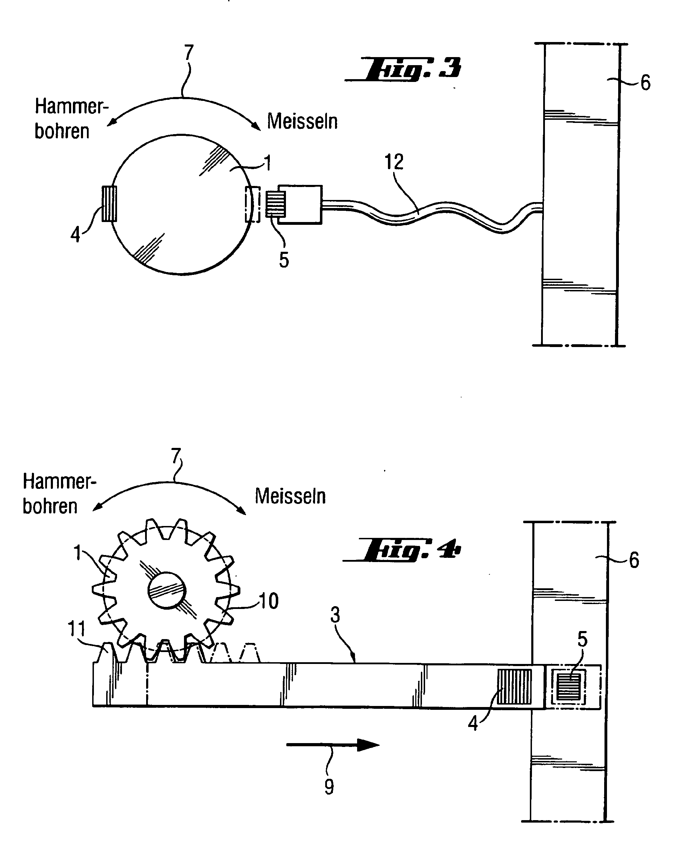

Bei der Ausführungsform der Erfindung nach Fig. 3 ist der Permanentmagnet 4 im Inneren der Maschine direkt am Schaltknopf 1 befestigt. Der Hall-Sensor 5 ist über eine Kabelverbindung 12 aus der Antriebs- und Überwachungselektronik 6 herausgeführt bis in unmittelbare Nähe des Drehknopfs 1. In der Stellung "Hammerbohren" ist der Permanentmagnet 4 wiederum vom Hall-Sensor 5 entfernt; die Reatkionsmomentüberwachung ist wirksam. Wird die Position "Meißeln" gewählt, so ist bei gleichzeitig anderer Vorgabe bestimmter Betriebsparameter die Reaktionsmomentüberwachung unwirksam.

Bei der Ausführungsvariante nach Fig. 4 weist die Schaltstange 3 zumindest an dem dem Schaltknopf 1 zugekehrten Ende eine (Teil-)Verzahnung 11 auf, die mit einem Zahnrad 10 kämmt, das auf der Maschineninnenseite angeordnet ist, und auf der Achse des Drehknopfs 1 sitzt. Auch mit diesem Antriebsmechanismus für die Umschalteinrichtung läßt sich eine sichere und zuverlässige Bewegung und Positionierung des Schaltmagneten 4 in bezug auf den Hall-Sensor 5 gewährleisten.

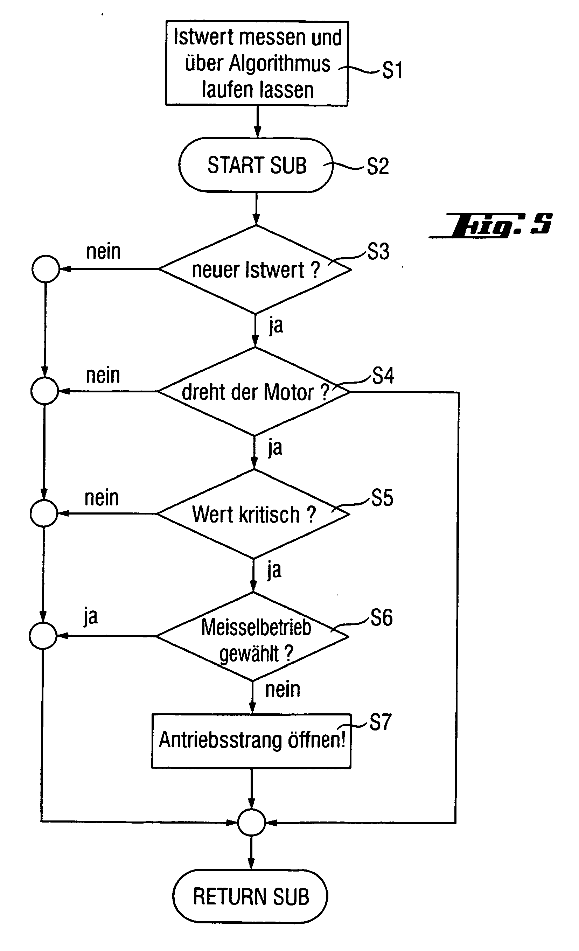

Die Fig. 5 zeigt exemplarisch ein Ablaufdiagramm für eine Unterroutine eines Algorithmus' zur Überwachung kritischer Betriebssituationen. beispielsweise des oben erwähnten gefährlichen Reaktionsmoments beim Blockieren eines Werkzeugs im Falle eines Kombihammers bei Wahl des Bohrbetriebs bzw. die softwaremäßige Unterbrechung des Ablaufs dieser Unterroutine im Fall der Wahl des Meißelbetriebs. Im Schritt S1 des dargestellten Ablaufdiagramms werden zunächst kontinuierlich oder in sehr kurzen Zeitabständen, beispielsweise durch einen oder mehrere im Gerätegehäuse angeordnete Beschleunigungssensoren gemessene, elektronisch voraufbereitete und digitalisierte Istwerte bereitgestellt, die eine repräsentative Aussage über momentan auf das Gerätegehäuse wirkende Beschleunigungskräfte beinhalten. Im Schritt S2 wird die Überwachungs-Unterroutine eines Steuer- und Überwachungsalgorithmus' der Maschine unter Zugrundelegung mindestens eines momentanen Istwerts gestartet. Im Schritt S3 wird geprüft, ob der momentane Istwert sich signifikant von einem zuvor überprüften und abgearbeiteten Istwert unterscheidet. Ist dies der Fall, so wird im Schritt S4 zunächst geprüft, ob der Motor der Werkzeugmaschine eingeschaltet ist. Ist auch dies der Fall, so wird im Schritt S5, beispielsweise nach zweimaliger Intergration des gemessenen Beschleunigungswerts geprüft, ob innerhalb eines Zeitintervalls von wenigen Millisekunden ein Verdrehwinkel des Maschinengehäuses zu erwarten ist aufgrund des Werts der gemessenen Beschleunigung. Ist dies der Fall, so wird anschließend im Schritt S6 noch geprüft, ob der Gerätebenutzer "Meißelbetrieb" oder "Bohrbetrieb" gewählt hat. Ist die Maschine auf Bohrbetrieb eingestellt und der gemessene Istwert der Beschleunigung entsprechend hoch, so wird im Schritt S7 die Magnetkupplung geöffnet, die den Antriebsstrang vom Motor zum Werkzeughalter unterbricht, so daß es nicht zu der für den Gerätebenutzer gefährlichen Drehschleuderbewegung der Maschine aufgrund des schlagartig ansteigenden Reaktionsmoments kommen kann.

Bei den soweit beschriebenen Ausführungsbeispielen für die Erfindung war das durch das Betätigungselement, also beispielsweise den Drehknopf 1, über die Schubstange 3 EIN- bzw. AUS-schaltbare bistabile Schalterelement ein durch einen Permanentmagenten 4 betätigbarer Hall-Sensorschalter 5. Es ist jedoch möglich und für manche Anwendungsfälle mit besonders beengten Raumverhältnissen von Vorteil, das bistabile Schalterelement durch einen durch elektromagnetische Strahlung erregbaren Schalter zu ersetzen, beispielsweise einen opto-elektronischen Schalter. In diesem Fall kann der Permanentmagnet 4 durch eine sehr kleine Halbleiterlichtquelle ersetzt werden, die bei Betätigung der Umschaltvorrichtung relativ zu einem zugeordneten photoelektrischen Empfänger- und Schalterelement verschieblich ist. Weiterhin kann es etwa bei Abwandlung der Ausführungsform nach Fig. 3 von Vorteil sein, wenn der Hall-Sensorschalter 5 durch ein fest installiertes opto-elektronisches Bauelement ersetzt ist, wobei dann anstelle des Permanentmagneten 4 ein Abschattelement in Form eines auf der Innenseite des Drehschalters 1 vorspringenden Plättchens bzw. Blendenelements ersetzt sein kann, das bei Wahl des Betriebsmodus "Meißeln' in einem Lichtwegspalt zwischen einer Lichtquelle und einem photoelektrischen Empfängerelement steht und dadurch den Lichtweg zwischen Sender und Empfänger unterbricht.

## Patentansprüche

1. Elektrischer Kombihammer für wahlweise Anwendung als Bohr- oder Meißelhammer, mit einer Einrichtung zur EIN/AUS- oder Umschaltung einzelner elektrischer Systemfunktionen bei Wechsel des Bearbeitungsmodus durch Betätigung einer an der Maschine vorhandenen Umschaltvorrichtung durch den Benutzer, die einen aus zwei bei Betätigung der und durch die Umschaltvorrichtung relativ zueinander bewegbaren Elementen bestehenden bistabilen Schalter (4, 5) aufweist, der in einer Schaltposition der Umschaltvorrichtung einzelne elektrische Systemfunktionen der Maschine wirksam und in einer anderen Schaltposition unwirksam schaltet, **dadurch gekennzeichnet, dass** bei Umschaltung von Bohrauf Meißelmodus durch Betätigen der Umschaltvorrichtung der dabei mitbetätigte bistabile Schalter (4, 5) eine bei Wahl des Bohrmodus wirksame Systemfunktion eines Blockierschutzes unwirksam schaltet.

2. Elektrischer Kombihammer nach Anspruch 1, **dadurch gekennzeichnet, daß** der bistabile Schalter ein in der Maschine fixierter Hall-Sensorschalter (5) ist, der durch einen bei Betätigung der Umschalteinrichtung annäherbaren bzw. entfernbaren Permanentmagneten (4) umschaltbar ist.

3. Elektrischer Kombihammer nach Anspruch 1, **dadurch gekennzeichnet, daß** der bistabile Schalter ein durch elektromagnetische Strahlung erregbarer Schalter ist, dessen Erregerelement bei Betätigung der Umschalteinrichtung relativ zu einem Erregerbereich des Schalter verschiebbar ist.

4. Elektrischer Kombihammer nach Anspruch 3, **dadurch gekennzeichnet, daß** der bistabile Schalter ein opto-elektronischer Schalter ist, dessen Erregerlichtquelle bei Betätigung der Umschaltvorrichtung relativ zu einem zugeordneten photoelektrischen Empfänger- und Schalterelement verschiebbar ist.

5. Elektrischer Kombihammer nach Anspruch 3, **dadurch gekennzeichnet, daß** der bistabile Schalter ein in der Maschine fixierter opto-elektronischer Schalter ist mit einem mit der Umschalteinrichtung gekoppelten Abschattelement, das bei Betätigung der Umschalteinrichtung in einer Schaltposition im Lichtweg zwischen einer Lichtquelle und einem photoelektrischen Empfänger des Schalters steht und in einer anderen Schaltposition diesen Lichtweg freigibt.

6. Elektrischer Kombihammer nach einem der vorstehenden Ansprüche, **dadurch gekennzeichnet, daß** die Umschaltvorrichtung ein vom Benutzer wahlweise umschaltbares Betätigungselement (1) aufweist, das mit einem mechanischen Bewegungsglied (2, 3; 2, 3, 8; 10, 11, 3) gekuppelt ist, an dem das bewegbare Element (4) des bistabilen Schalters befestigt ist.

7. Elektrischer Kombihammer nach Anspruch 6, **dadurch gekennzeichnet, daß** das Betätigungselement eine im Maschinengehäuse gelagerte Schiebetaste ist, die mit einer das bewegbare Element des bistabilen Schalters tragenden Schub-/Zugstange verbunden ist.

8. Elektrischer Kombihammer nach Anspruch 6, **dadurch gekennzeichnet, daß** das Betätigungselement ein im Maschinengehäuse gelagerter Drehknopf (1) ist, auf dessen Achse eine das bewegbare Element (4) des bistabilen Schalters tragende Exzenter-Schub-/Zugstange gelagert ist.

9. Elektrischer Kombihammer nach Anspruch 6, **dadurch gekennzeichnet, daß** das Betätigungselement ein im Maschinengehäuse gelagerter, gehäuseinnenseitig mit einem Kurbelzapfen (2) versehener Drehknopf (1) ist, der Teil eines eine Schub-/Zugstange betätigenden Kurbeltriebs ist, an welcher das bewegbare Element des bistabilen Schalters befestigt ist.

10. Elektrischer Kombihammer nach Anspruch 6, **dadurch gekennzeichnet, daß das** Betätigungselement ein im Maschinengehäuse gelagerter Drehknopf (1) ist, auf dessen Achse gehäuseinnenseitig ein zumindest teilverzahntes Rad (10) sitzt, das mit einer Zahnstange (3, 11) kämmt, an der das bewegbare Element (4) des bistabilen Schalters befestigt ist.

11. Elektrischer Kombihammer nach Anspruch 6, **dadurch gekennzeichnet, daß** das Betätigungselement ein im Maschinengehäuse gelagerter Drehknopf (1) ist, auf dessen Achse gehäuseinnenseitig ein mit dem Drehknopf verdrehbares Halteelement für das bewegbare Element (4) des bistabilen Schalters sitzt.

## Claims

1. An electric combination hammer for optional use as a hammer drill or a chipping hammer, which has a mechanism for switching it ON/OFF or switching between individual electrical system functions when the mode of operation is changed as a result of the user operating a switch-over device provided on the power tool and comprising a bistable switch (4, 5) made up of two elements that are movable relative to one another when the switch-over device is operated, said switch, in one switch position of the switch-over device, switching individual electrical system functions of the tool to operative status and in another switch position to inoperative status, **characterized in that,** upon switching over from the drilling mode to the chipping mode by operation of the switch-over device, the simultaneously operated bistable switch (4, 5) switches a system function of a jamming protection device, which is operative when the drilling mode is selected, to its inoperative status.

2. An electric combination hammer according to Claim 1, **characterized in that** the bistable switch is a Hall sensor switch (5) which is fixed in the power tool and which can be switched over by a permanent magnet (4), said permanent magnet (4) being made to approach said Hall sensor switch (5) or move away from it upon operation of the switch-over device.

3. An electric combination hammer according to Claim 1, **characterized in that** the bistable switch is a switch which can be excited by electromagnetic radiation, its exciter element being displaceable relative to an exciter region of the switch on operation of the switch-over device.

4. An electric combination hammer according to Claim 3, **characterized in that** the bistable switch is an opto-electronic switch, its exciting light source being displaceable relative to an associated photo-electric receiving and switching element on operation of the switch-over device.

5. An electric combination hammer according to Claim 3, **characterized in that** the bistable switch is an opto-electronic switch fixed in the tool, with a screening element, which is connected to the switch-over device and which, on operation of said switch-over device, in one switch position stands in the light path between a light source and a photo-electric receiver of the switch and in another switch position leaves this light path unobstructed.

6. An electric combination hammer according to one of the preceding claims, **characterized in that** the switch-over device comprises an operating element (1) which can optionally be switched over by the user and which is connected to a mechanical motion element (2, 3; 2, 3, 8; 10, 11, 3), to which the movable element (4) of the bistable switch is fixed.

7. An electric combination hammer according to Claim 6, **characterized in that** the operating element is a slide key which is mounted in the tool housing and is connected to a push/pull rod carrying the movable element of the bistable switch.

8. An electric combination hammer according to Claim 6, **characterized in that** the operating element is a rotary knob (1) which is mounted in the tool housing and has, mounted on its pin, an eccentric push/pull rod which carries the movable element (4) of the bistable switch.

9. An electric combination hammer according to Claim 6, **characterized in that** the operating element is a rotary knob (1) which is mounted in the tool housing and is provided on the inside of the housing with a crankpin (2), said rotary knob (1) being part of a crank assembly which operates a push/pull rod, to which the movable element of the bistable switch is fixed.

10. An electric combination hammer according to Claim 6, **characterized in that** the operating element is a rotary knob (1), which is mounted in the tool housing and which has, seated on its pin on the inside of the housing, a wheel (10) which is at least partly toothed and which meshes with a toothed rack (3, 11), to which the movable element (4) of the bistable switch is fixed.

11. An electric combination hammer according to Claim 6, **characterized in that** the operating element is a rotary knob (1), which is mounted in the tool housing and which has, seated on its pin on the inside of the housing, an element, which is rotatable along with the rotary knob, for holding the movable element (4) of the bistable switch.

## Revendications

1. Perforateur-burineur électrique utilisable au choix comme marteau perforateur ou comme burineur, comprenant un dispositif pour activer/désactiver ou pour commuter certaines fonctions électriques de système par le biais d'un changement, opéré par l'utilisateur, du mode de fonctionnement par actionnement d'un dispositif de commutation prévu sur l'appareil, ledit dispositif de commutation comportant un commutateur bistable (4, 5) qui est constitué de deux éléments déplaçables l'un par rapport à l'autre lors de l'actionnement du dispositif de commutation et qui, dans une position de commutation du dispositif de commutation, active certaines fonctions électriques de système de l'appareil et, dans une autre position de commutation, les désactive, **caractérisé en ce que,** lors de la commutation du mode perforation au mode burinage par actionnement du dispositif de commutation, le commutateur bistable (4, 5) actionné lui aussi à cette occasion désactive une fonction de système d'une protection antiblocage qui, lorsque le mode de perforation est sélectionné, est active.

2. Perforateur-burineur électrique selon la revendication 1, **caractérisé en ce que** le commutateur bistable est un commutateur à capteur Hall (5) qui est immobilisé dans l'appareil et qui est commutable par l'intermédiaire d'un aimant permanent (4) apte à être approché, respectivement éloigné lors de l'actionnement du dispositif de commutation.

3. Perforateur-burineur électrique selon la revendication 1, **caractérisé en ce que** le commutateur bistable est un commutateur qui est excitable par l'intermédiaire d'un rayonnement électromagnétique et dont l'élément excitateur peut se déplacer par rapport à une zone d'excitation du commutateur en cas d'actionnement du dispositif de commutation.

4. Perforateur-burineur électrique selon la revendication 3, **caractérisé en ce que** le commutateur bistable est un commutateur optoélectronique dont la source de lumière d'excitation peut se déplacer par rapport à un élément récepteur et commutateur photoélectrique associé en cas d'actionnement du dispositif de commutation.

5. Perforateur-burineur électrique selon la revendication 3, **caractérisé en ce que** le commutateur bistable est un commutateur optoélectronique immobilisé dans l'appareil et comprenant un élément d'occultation qui est couplé au dispositif de commutation et qui, en cas d'actionnement du dispositif de commutation, se trouve, dans une position de commutation, sur le chemin optique entre une source lumineuse et un récepteur photoélectrique du commutateur et libère, dans une autre position de commutation, ce chemin optique.

6. Perforateur-burineur électrique selon une des revendications précédentes, **caractérisé en ce que** le dispositif de commutation comporte un élément d'actionnement (1) qui est commutable au gré de l'utilisateur et qui est couplé à un organe mécanique de déplacement (2, 3 ; 2, 3, 8 ; 10, 11, 3) auquel l'élément mobile (4) du commutateur bistable est fixé.

7. Perforateur-burineur électrique selon la revendication 6, **caractérisé en ce que** l'élément d'actionnement est une touche coulissante qui est logée dans le carter de l'appareil et qui est reliée à une tige de poussée/traction portant l'élément mobile du commutateur bistable.

8. Perforateur-burineur électrique selon la revendication 6, **caractérisé en ce que** l'élément d'actionnement est un bouton rotatif (1) qui est logé dans le carter de l'appareil et sur l'axe duquel est montée une tige de poussée/traction excentrique portant l'élément mobile (4) du commutateur bistable.

9. Perforateur-burineur électrique selon la revendication 6, **caractérisé en ce que** l'élément d'actionnement est un bouton rotatif (1) qui est logé dans le carter de l'appareil et est muni, côté intérieur du carter, d'un maneton (2) et qui fait partie d'une transmission à manivelle qui actionne une tige de poussée/traction et à laquelle est fixé l'élément mobile du commutateur bistable.

10. Perforateur-burineur électrique selon la revendication 6, **caractérisé en ce que** l'élément d'actionnement est un bouton rotatif (1) qui est logé dans le carter de l'appareil et sur l'axe duquel est montée, côté intérieur du carter, une roue au moins partiellement dentée (10) qui s'engrène avec une crémaillère (3, 11) sur laquelle est fixé l'élément mobile (4) du commutateur bistable.

11. Perforateur-burineur électrique selon la revendication 6, **caractérisé en ce que** l'élément d'actionnement est un bouton rotatif (1) qui est monté dans le carter de l'appareil et sur l'axe duquel est monté, côté intérieur du carter, un élément de retenue apte à être tourné avec un bouton rotatif et destiné à l'élément mobile (4) du commutateur bistable.
